# EUROPÄISCHE PATENTSCHRIFT

(11) **EP 2 006 347 B1**
(45) Veröffentlichungstag und Bekanntmachung des Hinweises auf die Patenterteilung: **09.03.2016**
(21) Anmeldenummer: 08104494.3
(22) Anmeldetag: 20.06.2008
(51) Int. Cl.: C09K 5/06, F28D 20/02

(54) **LATENTWÄRME-SPEICHERMATERIAL**
LATENT HEAT STORAGE MATERIAL
MATÉRIAUX D'ACCUMULATION DE CHALEUR LATENTE

(30) Priorität: 22.06.2007 DE 102007029273
(43) Veröffentlichungstag der Anmeldung: 24.12.2008
(73) Patentinhaber: SGL Carbon SE, 65201 Wiesbaden (DE)
(72) Erfinder: Baumann, Alois, 86641, Rain (DE)

(56) Entgegenhaltungen:
- EP-A1- 1 156 097
- EP-A1- 1 598 406
- DE-A1- 19 630 073

## Beschreibung

Die Erfindung betrifft ein Latentwärme-Speichermaterial, das aus mindestens zwei Lagen eines kompressiblen; graphitischen Materials besteht und mit mindestens einem Phasenwechsel-Material infiltriert ist sowie ein Verfahren zur Herstellung eines solchen Latentwärme-Speichermaterials.

Latentwärme-Speichermaterialien auf der Basis von graphitischen Materialien, die mit einem Phasenwechsel-Material gemischt, imprägniert oder infiltriert sind, sind aus den Dokumenten DE 196 30073, EP1156097 und BP 1 598 406 bekannt. Die graphitischen Materialien bilden eine gut wärmeleitfähige Matrix für die wesentlich schlechter wärmeleitfähigen Phasenwechsel-Materialien und gestatten somit einen besseren Wärmeaustausch der so erhaltenen Latentwärme-Speichermaterialien. Insbesondere bietet sich für die Herstellung von einfachen Formkörpern das Verpressen von zu Platten vorkompaktierten expandierten Graphit an. Das Infiltrieren von Formkörpern aus kompaktierten expandierten Graphit wird durch die geringe Geschwindigkeit des Eindringens von Phasenwechsel-Material behindert. Für solche Platten aus kompaktierten expandierten Graphit sind lange Zeiten für Evakuierung und Infiltration nötig, um zu vermeiden, dass zu wenig PCM aufgenommen wird, Nachteilig daran sind lange Prozesszeiten oder geringe Speicherfähigkeit des so hergestellten Latentwärme-Speichermaterials.

Die Erfindung hat sich die Aufgabe gestellt, ein Latentwärme-Speichermaterial, das aus mindestens zwei Lagen eines kompressiblen, graphitischen Materials besteht und mindestens einem Phasenwechsel-Material infiltriert ist, anzugeben. Die Erfindung hat sich weiterhin die Aufgabe gestellt, ein Verfahren zur Herstellung eines solchen Latentwärme-Speichermaterials zu schaffen.

Die Aufgabe wird durch die kennzeichnenden Merkmale des Patentanspruch 1 gelöst. Vorteilhafte Ausgestaltungen sind in den weiteren Ansprüchen dargelegt.

Die vorgeschlagene Strukturierung begünstigt die Evakuierung der Graphitmatrix. Dadurch wird die in der Graphitmatrix eingeschlossene Luft schneller und vollständiger entfernt und eine schnellere Infiltration der Graphitmatrix sowie ein höherer Füllgrad mit dem Phasenwechsel-Material erzielt.

Das zur Verbesserung der thermischen Leitfähigkeit des Latentwärme-Speichermaterials verwendete, kompressible Graphitmaterial wird in an sich bekannter Weise durch thermisches Expandieren von Graphiteinlagerungsverbindungen zu sogenannten expandierten Graphit und nachfolgendes Verdichten des expandierten Graphits zu flexiblen Folien oder zu Platten hergestellt (US 3,404,061; DE 26 08 866; US 4,091,083).

Die kompressiblen Graphit-Lagen können bereits die Rohdichte haben, die für sie im fertigen Latentwärme-Speichermaterial vorgesehen ist. Der beim Zusammenpressen der Lagen aus kompressiblen Graphit zur Herstellung des Latentwärme-Speichermaterials aufgewendete Pressdruck darf dann nicht den zum Erzielen der gegebenen Rohdichte der kompressiblen Graphit-Lage erforderlichen Verdichtungsdruck übersteigen. Es können aber auch zunächst kompressible Graphit-Lagen mit einer niedrigeren Rohdichte als der Endrohdichte im fertig verpressten Latentwärme-Speichermaterial aufgebracht werden. Die vorgesehene Endrohdichte wird dann erst beim Zusammenpressen der Komponenten des Latentwärme-Speichermaterials erzeugt.

Die Nuttiefe im Vorpressling sollte vorzugsweise mindestens 3,5 mm betragen. Das Verpressen der Vorpresslinge zu Paketen erst in der Höhe und dann in der Paketbreite führt zu keinem homogenem Verpressungsgrad der Streifen. In Pressrichtung nimmt der Vernetzungsgrad der Streifen ab und führt entgegen der Pressrichtung zu immer kleineren Nuttiefen.

Das Verpressen sollte vorzugsweise in der Reihenfolge Paketbreite und dann Höhe erfolgen. Dabei hat sich eine Höhe von 12,2 +/- 0,2 mm und eine Breite von 30,7 +/- 0,2 mm der Vorpresslinge mit Nuten, die ca. 3,5 mm tief und ca. 4,5 mm breit sind als vorteilhaft erwiesen. Vorzugsweise werden 30-250 Streifen der Vorpresslinge zu einem Paket verpresst.

Die Erfindung wird im folgenden beispielhaft durch Ausführungsbeispiele erläutert.

### Vergleichsbeispiel 1

Streifen mit den Maßen (480 mm Länge, 40 mm Breite, 15 mm Dicke) werden zu einem Paket verpresst.
Das Paketgewicht aus kompaktierten Graphit betrug 862 g. Ein solches Paket wird in eine Tüte eingebracht und mit Hilfe einer Vakuumpumpe bis zu einem Druck von 10 mbar evakuiert. Die Evakuierungszeit betrug 220 s.
Anschließend erfolgte die Infiltration mit 3100 ml Wasser als Phasenwechsel-Material.
Nach ca. 6 Stunden Lagerung wurden noch ca. 300 - 400 ml freies Wasser festgestellt.

### Vergleichsbeispiel 2

Analog Beispiel 1 wurde ein leichteres Paket zusammengestellt und verpresst.

### Das

Paketgewicht Graphit betrug 770 g.
Nach einer Evakuierungszeit von 220 s erfolgte die Infiltration mit 3100 ml Wasser.
Verformung der Tüte (Blase) sehr groß. Sensor außer Betrieb. Befüllvorgang wird abgeschlossen.
Noch sehr viel freies Wasser.
Nach ca. 6 Stunden Lagerung nach ca. 500 - 600 ml freies Wasser.

### Vergleichsbeispiel 3

Analog Beispiel 1 wurde ein Paket zusammengestellt und verpresst. Das Paketgewicht Graphit betrug 757 g.
Die Evakuierungszeit wurde auf 500 Sekunden erhöht.
Der Befüllvorgang verläuft annähernd normal. Verformung der Tüte geringfügig stärker. Paket nach 10 Minuten Lagerung fest.

### Beispiel 1

Es werden beidseitig je ca. 15 Diagonalnuten im Winkel von ca. 45° per Hand eingebracht.

| | |
|---|---|
| Paketgewicht Graphit: | 775 g |
| Evakuierungszeit: | 500 s |

Der Befüllvorgang verläuft normal. Verformung der Tüte normal. Paket sofort fest.

### Beispiel 2

Vor dem Verpressen werden einseitig 2 Längsnuten und 4 Diagonalnuten eingebracht.

| | |
|---|---|
| Paketgewicht Graphit: | 806 g |
| Evakuierungszeit: | 220 s |

Beobachtungen: Befüllvorgang verläuft normal. Verformung der Tüte normal. Paket in der Maschine fest.

### Beispiel 3

Per Hand werden einseitig 2 Längsnuten in Serienstreifen eingebracht, die Evakuierungszeit wird auf 90 Sekunden festgelegt:

| | |
|---|---|
| Paketgewicht Graphit: | 780 g |
| Evakuierungszeit: | 90 s |

Befüllvorgang verläuft normal. Verformung der Tüte normal. Paket nach 10 Minuten Lagerung fest.

Die Ergebnisse weiterer Beispiele sind in Tabelle 1 zusammengefasst dargestellt.

| Beispiel | Streifen | | | Paketgewicht | | | Ergebnis | |
|---|---|---|---|---|---|---|---|---|
| | Breite | Höhe | Nut vor Verpressen | nach Verpressen | nach Befüllen | Evakuierungszeit | nach 10 s | nach 600 s |
| 11 | 11,8 | 41/40,1 | 3 | | | 90 Sek. | freies Wasser | |
| 12 | 11,8 | 41/40,1 | 3 | | | 90 Sek. | freies Wasser | fest |
| 13 | 11,8 | 41/40,3 | 3,5 | 579 | 3698 | 90 Sek. | freies Wasser | fest |
| 14 | 11,8 | 41/40,1 | 3,5 | 574 | 3449 | 90 Sek. | freies Wasser | fest |
| 15 | 10,7 | 41/40,5 | 3,5 | 582 | 3696 | 90 Sek. | freies Wasser | fest |
| 16 | 10,7 | 41/40,3 | 3 | 573 | 3739 | 90 Sek. | freies Wasser | fest |
| 17 | 10,7 | 41/40,4 | 3,5 | 571 | 3717 | 90 Sek. | freies Wasser | fest |
| 18 | 10,7 | 41/40,3 | 3,5 | 580 | 3678 | 90 Sek. | freies Wasser | fest |
| 19 | 10,7 | 41/40,4 | 3,5 | 578 | 3706 | 90 Sek. | freies Wasser | fest |

## Patentansprüche

1. Latentwärme-Speichermaterial, das aus mindestens zwei Lagen eines kompressiblen, graphitischen Materials besteht, bei dem Graphitplättchen im wesentlichen in aufeinanderliegenden Schichtebenen angeordnet sind und mindestens mit einem Phasenwechsel-Material infiltriert ist, **dadurch gekennzeichnet, dass** die Oberfläche einer jeden Lage mit einer die Außenseiten des Graphitmaterials erreichenden Strukturierung versehen ist, wobei die Evakuierungs- und Infiltrationsweglängen in den Schichtebenen durch die Strukturierung maximal 200 mm betragen.

2. Latentwärme-Speichermaterial nach Anspruch 1, **dadurch gekennzeichnet, dass** die Evakuierungs- und Infiltrationsweglängen in den Schichtebenen durch die Strukturierung maximal 50 mm betragen.

3. Latentwärme-Speichermaterial nach Anspruch 1 oder 2, **dadurch gekennzeichnet, dass** die Strukturierung in Form von Kanälen vorliegt, deren Verhältnis von Tiefe zu Breite im Bereich von 20 : 1 bis 1 : 20 liegt.

4. Latentwärme-Speichermaterial nach einem oder mehreren der Ansprüche 1 bis 3, **dadurch gekennzeichnet, dass** die Kanäle parallel zu den Graphitschichten angeordnet sind.

5. Latentwärme-Speichermaterial nach einem oder mehreren der Ansprüche 1 bis 4, **dadurch gekennzeichnet, dass** die Kanäle geradlinig, mäander-oder fischgrätenförmig angeordnet sind.

6. Latentwärme-Speichermaterial nach einem oder mehreren der Ansprüche 1 bis 4, **dadurch gekennzeichnet, dass** die Kanäle In Evakulerungs- und/oder Infiltrationsrichtung angeordnet sind.

7. Verfahren zur Herstellung eines Latentwärme-Speichermaterials gemäß einem oder mehreren der Ansprüche 1 bis 6, **dadurch gekennzeichnet, dass** mindestens zwei Lagen eines kompressiblen, graphitischen Materials miteinander in Kontakt gebracht, bei einer Temperatur bis 400 °C und bei einem Druck von 0,1 und 200 MPa gepresst werden, wobei vor dem Verpressen bis zu 30% der Oberfläche jeder Lage mit einer die Außenseiten des Graphitmaterials erreichenden Strukturierung versehen werden.

8. Verfahren nach Anspruch 7, **dadurch gekennzeichnet, dass** die Evakuierung des Graphitmaterials und Infiltration des Schichtstoffes mit Phasenwechsel-Material in eine Richtung oder von einer Seite aus vorgenommen wird.

9. Verfahren nach Anspruch 7 oder 8, **dadurch gekennzeichnet, dass** die Kanäle eingepresst oder gewalzt werden und der Querschnitt scharfe Kanten aufweist.

10. Verfahren nach Anspruch 7 oder 8, **dadurch gekennzeichnet, dass** die Kanäle eingefräst werden.

## Claims

1. A latent heat storage material, comprising: at least two plies of a compressible graphitic material with graphite platelets disposed substantially in layer planes lying one above the other and infiltrated with at least one phase change material; each ply having a surface formed with a surface structuring reaching the outsides of said graphite material and defining evacuation and infiltration travel paths; and a travel length of said evacuation and infiltration travel paths in said layer planes due to said structuring amounting to a maximum of200 mm.

2. The latent heat storage material according to claim 1, wherein said travel lengths of said evacuation and infiltration travel paths in the layer planes due to the structuring amount to a maximum of 50 mm.

3. The latent heat storage material according to claim 1 or 2, wherein said structuring is in the form of channels having a ratio of a depth to a width in a range of 20:1 to 1:20.

4. The latent heat storage material according to at least one of the preceding claims 1 to 3, wherein said channels are arranged parallel to said graphite layers.

5. The latent heat storage material according to at least one of the preceding claims 1 to 4, wherein said channels are arranged in a configuration selected from the group consisting of a rectilinear configuration, a meander-shaped configuration, or a herringbone shape configuration.

6. The latent heat storage material according to one of the preceding claims 1 to 4, wherein said channels extend in an evacuation and/or infiltration direction.

7. A method of producing a latent heat storage material according to at least one of the preceding claims 1 to 6, wherein at least two plies of a compressible graphitic material are brought into contact with each other at a temperature of up to 400 °C and at a pressure of between 0.1 MPa and 200 MPa, wherein before the compressing step up to 30% of a surface of each ply is provided with a structuring reaching the outsides of the material.

8. The method according to claim 7, which comprises evacuating the graphite material and infiltrating the layer material with phase change material in one direction or from one side.

9. The method according to claim 7 or 8, which comprises pressing or rolling channels into the plies of compressible material, the channels having a cross section with sharp edges.

10. The method according to claim 7 or 8, which comprises milling channels into the material.

## Revendications

1. Matériau accumulateur de chaleur latente, qui se compose d'au moins deux strates d'un matériau graphitique compressible, dans lequel des plaquettes de graphite sont disposées essentiellement dans des plans de couche superposés, et qui est infiltré au moins avec un matériau à changement de phase, **caractérisé en ce que** la surface de chaque strate est munie d'une structuration atteignant les côtés extérieurs du matériau en graphite, les longueurs de chemin d'évacuation et d'infiltration dans les plans de couche à travers la structuration atteignant au maximum 200 mm.

2. Matériau accumulateur de chaleur latente selon la revendication 1, **caractérisé en ce que** les longueurs de chemin d'évacuation et d'infiltration dans les plans de couche à travers la structuration atteignent au maximum 50 mm.

3. Matériau accumulateur de chaleur latente selon la revendication 1 ou 2, **caractérisé en ce que** la structuration se présente sous la forme de canaux dont le rapport de la profondeur à la largeur se situe dans la plage de 20 : 1 à 1 : 20,

4. Matériau accumulateur de chaleur latente selon l'une ou plusieurs des revendications 1 à 3, **caractérisé en ce que** les canaux sont disposés parallèlement aux couches de graphite.

5. Matériau accumulateur de chaleur latente selon l'une ou plusieurs des revendications 1 à 4, **caractérisé en ce que** les canaux sont disposés de façon rectiligne, sinueuse ou en arêtes de poisson.

6. Matériau accumulateur de chaleur latente selon l'une ou plusieurs des revendications 1 à 4, **caractérisé en ce que** les canaux sont disposés dans la direction d'évacuation et/ou d'infiltration.

7. Procédé de fabrication d'un matériau accumulateur de chaleur latente selon l'une ou plusieurs des revendications 1 à 6, **caractérisé en ce qu'**au moins deux strates d'un matériau graphitique compressible sont mises en contact l'une avec l'autre, et sont pressées à une température jusqu'à 400 °C et à une pression de 0,1 et 200 MPa, jusqu'à 30 % de la surface de chaque strate étant, avant la compression, munis d'une structuration atteignant les côtés extérieurs du matériau en graphite.

8. Procédé selon la revendication 7, **caractérisé en ce que** l'évacuation du matériau en graphite et l'infiltration de la matière de couche avec un matériau à changement de phase sont effectuées dans une direction ou à partir d'un côté.

9. Procédé selon la revendication 7 ou 8, **caractérisé en ce que** les canaux sont emmanchés ou laminés et la section transversale présente des arêtes vives.

10. Procédé selon la revendication 7 ou 8, **caractérisé en ce que** les canaux sont fraisés.
